# EUROPEAN PATENT APPLICATION

(11) **EP 1 686 270 A1**
(43) Date of publication of application: **02.08.2006**
(21) Application number: 04792120.0
(22) Date of filing: 07.10.2004
(51) Int. Cl.: F16B 7/04, F16B 7/18, F16B 7/20

(54) **PIPE JOINT**

(30) Priority: 29.10.2003 JP 2003369350
(71) Applicant: Yazaki Industrial Chemical Co., Ltd., Shizuoka 422-8519 (JP)
(72) Inventor: MINOWA, Isamu, YAZAKI INDUSTRIAL CHEMICALCO., LTD., Shizuoka-shi, Shizuoka 4228519 (JP)
(74) Representative: Lamb, Martin John Carstairs
(86) International application number: PCT/JP2004/014822
(87) International publication number: WO 2005/040620

(57) **Abstract**

A pipe joint that is capable of achieving a sufficient bearing force against pulling without increasing the length of contact with a pipe and that has excellent appearance. The pipe joint is composed of a joint body (2) and a fixture (3). The joint body (2) is constructed by joining tubular insertion sections (2a) with joining sections (2b) in between, the insertion sections (2a) being inserted and fitted in a pipe (P), the joining section (2b) being a single circular tube or a joint body that is composed of circular tubes, the single circular tube and the joint body having the same outside diameter as the outside diameter of the pipe (P). The fixture (3) has an elastic body (4) having the outside diameter same as the inner diameter of the pipe (P), holding plates (5) arranged on both faces of the elastic body, a retaining metal member (6) provided next to one of the holding plates and where folded-back claws (6c) capable of biting into the inner periphery of a insertion section (2a) are provided on the heads of legs (6b) that extend axially from the peripheral edge of an annular plate section (6a), a bolt (7), and a nut (8). The bolt (7) passes through the center sections of the elastic body (4), the holding plates, and the retaining metal member (6), and fastens them with the nut (8). The fixture (3) is inserted from an end section of the pipe (P) and fixed at a position corresponding to the length of the insertion section (2a) with the retaining metal member (6) provided at the end section.

## Description

### FIELD OF THE INVENTION

This invention relates to a pipe joint, and more particularly, to an inner-type pipe joint for detachably connecting cylindrical pipes.

### BACK GROUND OF THE INVENTION

In the prior art, joint units as pipe joints of this type are well known that are comprised of a connecting piece having at least two mounting faces, an arm lever detachably screwed to the mounting faces, and a sub-lever attached to the arm lever along its axis in such a manner that the sub-lever is screwed to the arm lever so as to be movable radially with respect to it.

Another type of pipe joints is known to include a pair of first and second connection bushes which are inserted in the ends of pipes to be coupled together, and a bolt and nuts which extend through the first connection bush at the center of the pair of bushes so as to force the second bush away from the first.

In any of the above-mentioned prior art pipe joints, however, the pressing force of the arm lever and the sub-lever or the first and the second connection bushes against the inner surfaces of the pipes is effected by a repulsive force exerted on the arm lever and the sub-lever through screws or on the first and the second connection bushes through bolts and nuts, and, since the structure does not permit the use of screws or bolts of large size, the contact length between the arm lever and the sub-lever, or between the first and the second connection bushes must be increased to accommodate more screws or bolts and nuts to obtain sufficient resistance to pulling tension. Furthermore, in the former type of pipe joints, two or more of the through holes for a wrench remain on the surface of the pipes, spoiling the appearance. On the other hand, in the latter type of pipe joints, the clearance observed between the first and the second connection bushes exposed from the pipes is also detrimental to the attractiveness of the pipes.
Reference 1: Japanese Utility model Publication No. H04 (1992)-109211.
Reference 2: Japanese Utility model Publication No. H05 (1993)-36114.

### DISCLOSURE OF THE INVENTION

### PROBLEMS THE PRESENT INVENTION RESOLVES

The purpose of the present invention is to provide a pipe joint that gives sufficient resistance against pulling tension without increasing contact length with pipes, and that is attractive in appearance.

### MEANS

The pipe joint 1, 1' or 1" of this invention, as stated in Claim 1, comprises a pipe joint body 2, 2' or 2" consisting of a plurality of cylindrical insertion parts 2a to be fitted in pipes P, the insertion parts 2a being connected together through connection part 2b, 2b' or 2b" consisting of a single or a plurality of cylinders having the same outer diameter with the pipes P. The pipe joint further comprises a fixing device 3 which consists of a circular elastic member 4 having an outer diameter nearly equal to the inner diameter of the pipe P, clamp discs 5, which are provided on both sides of the elastic member 4 and have approximately the same outer diameter with the elastic member 4, a stopper piece 6 which is positioned adjacent to one of the clamp discs and in which a circular plate 6a having a diameter smaller than the insertion parts 2a of the pipe joint body 2, 2' or 2 is provided with legs 6b that extend axially from a plurality of points with increasing diameter and have claws 6c formed by bending back the tips thereof outward in such a manner that the outer periphery has a diameter slightly greater than the inner diameter of the insertion parts 2a, and a bolt 7and a nut 8 lead through the center holes of the elastic member 4, the clamp discs 5 and the stopper piece 6 to fasten them tightly, the fixing device 3 having the stopper piece 6 at the end thereof at a position where the distance from the end of pipe P corresponds to the length of the insertion parts 2a.

The pipe joint 14, 14' or 14" of this invention as stated in Claim 2 comprises a pipe joint body 18, 18' or 18" consisting of a plurality of cylindrical insertion parts 18a which, having a cylindrical form to be fitted in pipe P, are formed at one end thereof with a taper 15 decreasing in diameter toward the other end and a number of axially extending slits 16 and are provided at the other end with a pin hole 17 perpendicular to the axis thereof, and which are connected together through connection part 18b, 18b' or 18b" consisting of a single cylinder or a plurality of cylinders having the same outer diameter of the pipe P. The pipe joint further comprises a push pin 20 which, having a cylindrical form to be fitted in the insertion parts 18a of the joint body 18, 18' or 18', is formed at the outer end thereof a head portion 20a having a taper 19 to engage with the taper 15 of the insertion parts 18a and is provided at the other end with a through pin hole 21 perpendicular to the axis thereof approximately corresponding to the pin hole 17. The pipe joint further comprises an elliptical pin 23 which, having the form of an elliptical cylinder, is provided at the center of one end thereof with a hexagonal recess 22 and is inserted in the pin hole 21 of the push pin 20, which is fitted in the insertion parts 18a of the joint body 18, 18' or 18", and turned to force the push pin 20 in the axial direction of the insertion part 18a.

The pipe joint 27 of this invention stated in Claim 3 comprises a pipe joint body 29 consisting of a plurality of insertions parts 29a which, having a cylindrical form to be fitted in pipe P, are formed at one end thereof with a number of axially extending slits 28 and are connected together at the other ends thereof through connection part 29b consisting of a single or a plurality of cylinders having the same outer diameter with the pipe P. The pipe joint further comprises a sleeve 32 which includes another insertion part 32a having a cylindrical form to be fitted in the insertion part 29a of the joint body 29, the insertion part 32a being formed on the inner periphery at the inner end thereof with a taper 30 decreasing in diameter toward the outer end, and on the same inner end a number of axially extending slits 31, and is provided at the outer end of the insertion part 32a with a stopper portion 32b which, having an outer diameter slightly smaller than the inner diameter of the pipe P, is provided with a through pin hole 33 perpendicular to the axis thereof. The pipe joint further comprises a push pin 35 which, having a cylindrical form to be fitted in the sleeve 32, is formed at the inner end thereof a head portion 32a having a taper 34 to engage with the taper 30 of the sleeve 32, and is provided at the outer end thereof with a through pin hole 36 perpendicular to the axis approximately corresponding to the pin hole 33 of the sleeve. The pipe joint further comprises an elliptical pin 38 which, having a form of an elliptical cylinder, is provided at the center of one end thereof with a hexagonal recess 37 and is inserted in the pin hole 36 of the push pin 35, which is inserted in the sleeve 32, which, in turn, is fitted in the insertion part 29a of the joint body 29, and turned to force the push pin 35 in the axial direction of the sleeve 32.

The pipe joint 42, 42' or 42" of this invention stated in Claim4 comprises a pipe joint body 45, 45' or 45" consisting of a plurality of insertions parts 45a which, having a cylindrical form to be fitted in pipe P, are formed at one end thereof with a number of slits 43 and a dowel hole 44 and are connected together at the other ends thereof through connection part 45b or 45b' or 45b" consisting of a single cylinder or a plurality of cylinders having the same outer diameter with pipe P, the connection part 45b, 45b' or 45b" being provided with a holder hole 46 at the mid point of the axis of the cylinder for the case of a single cylinder or at the cross point of axes of the cylinders for the case of plural cylinders. The pipe joint further comprises a sleeve 47 which, having the form of a cylinder with a bottom to be fitted in the insertion part 45a with the bottom thereof on the outer end side, is provided with a through hole 48 in the bottom, is formed with a number of axially extending slits 49 and is provided with a dowel 50 to engage with the dowel hole 44 of the pipe joint body 45, 45' or 45". The pipe joint further comprises a push pin 53 which, having a cylindrical form to be fitted in the sleeve 47, is formed on the periphery at the outer end thereof a taper 51 to engage with the through hole 48 of the sleeve 47, and is further formed at the center of the inner end thereof a protrusion 52 having a pointed tip or a flat top of a small diameter. The pipe joint further comprises a push screw holder 54 which, having a cylindrical form to be fitted in the holder 46 of the pipe joint body 45, 45' or 45", is formed at the inner end thereof a stopper portion 54a having an outer diameter greater than the holder 46, and is formed with a threaded hole 55 at the central axis. The pipe joint further comprises a push screw 58 which, having a hexagonal recess 56 at the outer end, is screwed in the threaded hole 55 of the push screw holder 56 and is formed at the inner end with a pointed tip 57 having a greater diameter to push therewith against the protrusion 52 of the push pin 53 inserted in the sleeve 47 which is, in turn, fitted in the insertion part 45a of the pipe joint body 45, 45' or 45" and thereby to shift the push pin in the direction of the axis of the sleeve 47.

### EFFECTS OF THE INVENTION

According to the pipe joint of the present invention as stated in Claim 1, since the fixing means, such as bolts and nuts, are arranged at the central region of the pipe, the use of bolts and nuts of large diameters is made possible and, while the elastic members increase in diameter through clamping of the bolts and nuts to be pressed against the whole inner periphery of the pipe, the bent back claws of the fixing device bite into the inner periphery of the insertion parts of the joint body, which makes it possible to realize a strong resistance against pulling tension without increasing the contact length of the joint with the pipes, and to maintain the attractiveness of the coupled pipes without leaving through holes in the pipes and the joint, or any clearance in the joint.

According to the pipe joint of the present invention as stated in Claim 2, one end of the insertion parts is pressed against the inner periphery of the pipe through a wedge action due to the displacement of the push pin caused by the turn of the elliptic pin, which makes it possible to realize a strong resistance against pulling tension without increasing the contact length of the joint with the pipes, and to maintain the attractiveness of the coupled pipes while leaving but one through hole in the pipe.

According to the pipe joint of the invention stated in Claim 3, in a way similar to that of the invention stated in Claim 2, one end of the insertion parts is pressed against the inner periphery of the pipe through a wedge action due to displacement of the push pin caused by the turn of the elliptic pin, which makes it possible to realize a strong resistance against pulling tension without increasing the contact length of the joint with the pipes, and to maintain the attractiveness of the coupled pipes while leaving but one through hole in the pipe.

According to the pipe joint of the invention stated in Claim 4, one end of each of the insertion parts is pressed against the inner periphery of the pipe through a wedge action due to displacement of the plurality of the push pins caused by the screwing-in of the push screw, which makes it possible to realize a strong resistance against pulling tension, without increasing the contact length of the joint with the pipes, and to maintain the attractiveness of the coupled pipes since coupling of a plurality of pipes can be effected by screwing a single push screw while leaving but one through hole in the pipe joint body.

### PREFERRED EMBODIMENTS OF THE INVENTION

The joint bodies of the pipe joints according to the present invention as stated in Claims 1 through 4 can be used in various configurations, such as a straight line type, an L-shape type, a T-shape type or a cross type, to connect 2 to 5 pipes together without restricting the angle between adjacent pipes to a right angle. The joint bodies of the pipe joints according to the present invention as stated in Claims 1 through 4 are made of synthetic resin reinforced with glass fiber or of a metal material such as aluminum.

A material such as urethane rubber is used as the elastic member in the fixing device of the pipe joint according to the present invention as stated in Claim 1. The stopper piece of the fixing device is made of a metal of relatively high hardness. For mounting the fixing device in the pipe, the fixing device is inserted to a position from the end of the pipe approximately corresponding to the length of the insertion part of the joint body with the stopper piece directed toward the end, and an appropriate tool for turning screws or nuts is used.

According to the present invention as stated in Claim 3, the pin hole of the push pin in the pipe joint is placed at a position slightly shifted toward the head portion from the pin hole of the insertion part at the beginning of the engagement between the push pin and the taper of the insertion part, and in this condition, the both pin holes make an ellipse of which the longer axis is perpendicular to the axes of the push pin and the pin hole. The elliptic pin shifts the push pin by 1mm through a turn of approximately 90° and the longer axis thereof comes into alignment with the pin holes of the joint and the push pin, thereby pressing one end of the insertion part against the inner periphery of the pipe.

The sleeve of the pipe joint according to the present invention as stated in Claim 3, is preferably made of a material having the rigidity of a synthetic resin reinforced with glass fiber. The pin hole of the push pin in the pipe joint is placed at a position slightly shifted toward the head portion from the pin hole of the insertion part at the beginning of the engagement between the push pin and the taper of the insertion part, and in this condition, the both pin holes make an ellipse of which the longer axis is perpendicular to the axes of the push pin and the pin hole. The elliptic pin shifts the push pin by 1mm through a turn of approximately 90° and the longer axis thereof comes into alignment with the pin holes of the joint and the push pin, thereby pressing one end of the insertion part against the inner periphery of the pipe.

The sleeve of the pipe joint according to the present invention as stated in Claim 4, is, as with the present invention as stated in Claim 3, preferably made of a material having the rigidity of a synthetic resin reinforced with glass fiber.

### EMBODIMENT 1

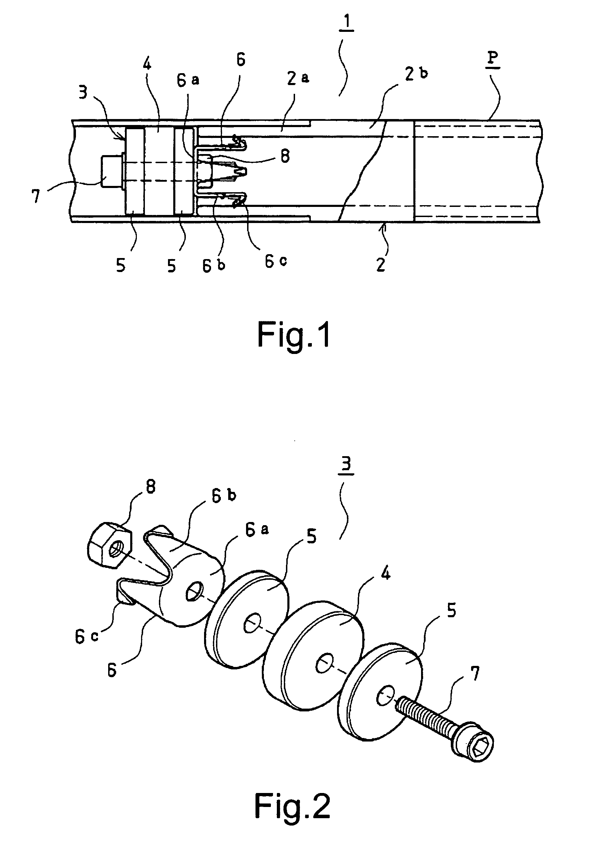

Fig. 1 is a side elevational view with a broken part of the structure of the pipe connection effected with the pipe joint according to the present invention as stated in Claim 1.

The pipe joint 1 of the present invention as stated in Claim 1 comprises a joint body 2 consisting of two insertion parts 2a connected in a straight line through a connection part 2b, which consists of a single cylinder having the same outer diameter with the pipes P. The joint body 2 is made of a synthetic resin material reinforced with glass fiber or a metal material such as aluminum.

Numeral 3 designates a fixing device which, together with the joint body 2, constitutes the pipe joint of the present invention as stated in Claim 1, and consists of an elastic member 4 of a circular disc made of a material like urethane rubber having an outer diameter nearly equal to the inner diameter of pipe P, clamp discs 5, which are provided on both sides of the elastic member 4 and have approximately the same outer diameter with the elastic member 4, a stopper piece 6, which is positioned adjacent one of the clamp discs (on the left side in Fig. 2) and in which a circular plate 6a having a diameter smaller than the insertion parts 2a of the pipe joint body 2 is provided with legs 6b, which extend axially from a plurality of points (four points in Fig. 1 and 2) with increasing diameter and have claws 6c formed by bending back the tips thereof outward in such a manner that the outer periphery thereof has a diameter slightly greater than the inner diameter of the insertion parts 2a and thereby the claws 6c are able to bite into the inner periphery of the insertion parts 2a, and a bolt 7 and a nut 8 lead through the center holes of the elastic member 4, the clamp discs 5 and the stopper piece 6 to fasten them together. The fixing device 3 is mounted by means of a tool described hereinafter in the pipe P with the stopper piece 6 directed toward the end thereof placed at a position where the distance from the end of pipe P corresponds to the length of the insertion parts 2a.

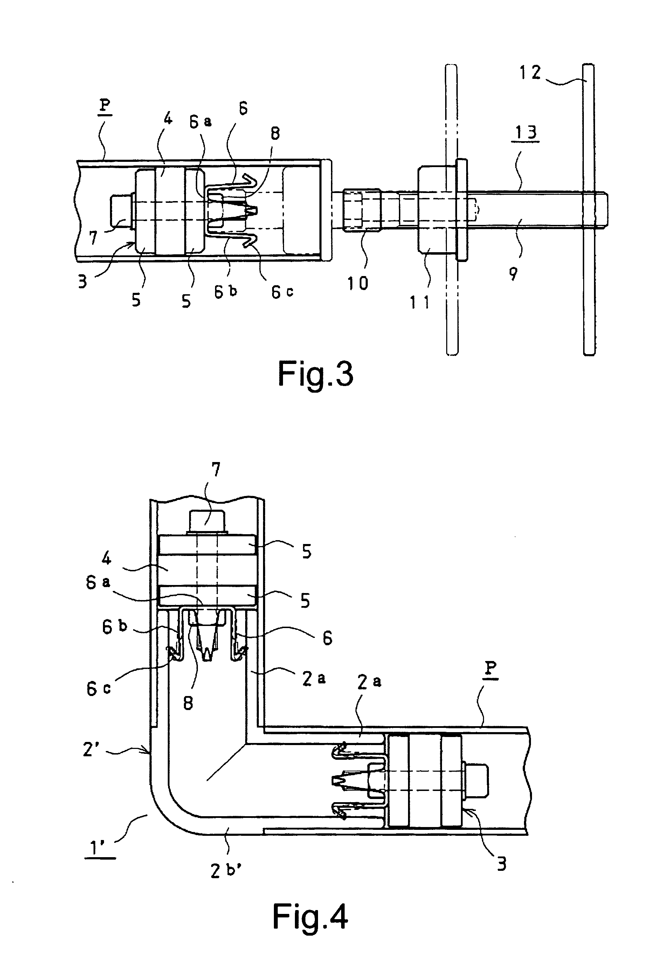

To connect pipes P using the pipe joint 1 of the present invention as stated in Claim 1, as shown in Fig. 3, first at one end of a rod 9 (the left end in Fig. 3) a box is provided 10, which fits on a nut 8, and a stopper 11, which fits in the end of the pipe P and hits against the end surface of the pipe P to position the fixing device at a distance from the end of the pipe corresponding to the length of the insertion part 2a of the joint body is provided on the rod 9. Using the tool 13 which is further provided with a handle 12 on the other end, the fixing device 3 is placed at the predetermined position in the pipe P, the bolt 7 and nut 8 are fastened by turning the handle 12, which makes the elastic disc 4 expand radially and press against the inner periphery of the pipe P and thereby fixes the fixing device 3 in the pipe P. Next, as the insertion part 2a of the joint body 2 is inserted in the end of the pipe P, the bent back claws 6c of the stopper piece 6 are first compressed inwardly and then bite into the inner periphery of the insertion part 2a thereby fixing the insertion part 2a there.

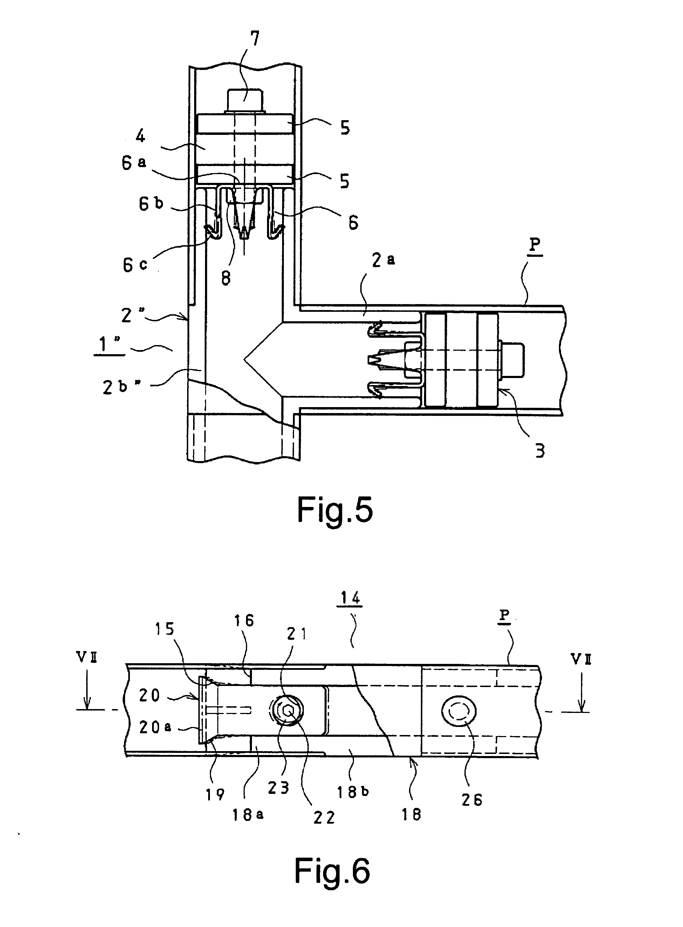

Figs. 4 and 5 are a side section view and a partly broken side elevational view respectively showing the second and the third embodiments of the structure of the pipe connection effected using the second and the third modifications of the pipe joint of the present invention as stated in Claim 1.

In the first modification 1' of the pipe joint 1 of the present invention as stated in Claim 1, the first embodiment has the connection part 2b of the joint body 2 consisting of a single cylinder having the same outer diameter as the pipe P, including a connection part 2b' of the joint body 2' consisting of also a single cylinder which is but bent in L shape. The second modification 1" includes as a connection part 2b" of the joint 2" a T-shaped structure consisting of three cylinders having the same outer diameter as the pipe P. Since the other structures and actions are similar to those of the pipe joint 1 of the present invention as stated in Claim 1, the same reference symbols are given to the corresponding members and the description of them is omitted.

In the above described embodiments and modifications, the nut 8 of the fixing device 3 is described to be provided on the side of the stopper piece 6, however this is not a restriction, and the other arrangement wherein the bolt head is on the side of the stopper piece 6 is also possible. In this case, at the end of the rod 9 of the tool 13, an engaging portion that engages with a hexagonal recess of the bolt 7 is be provided. Further, the bolt 7 of the fixing device 3 with a hexagonal recess may be replaced by a bolt or a screw with a hexagonal head, providing a corresponding engaging portion on the tool 13 that engages with the head. Moreover, the connection part 2b, 2b' or 2b" of the joint body 2, 2' or 2" is not limited in construction to a straight type, an L-shape type or a T-shape type; a cross type or a cross type having an additional pipe perpendicular thereto can also be employed.

### EMBODIMENT 2

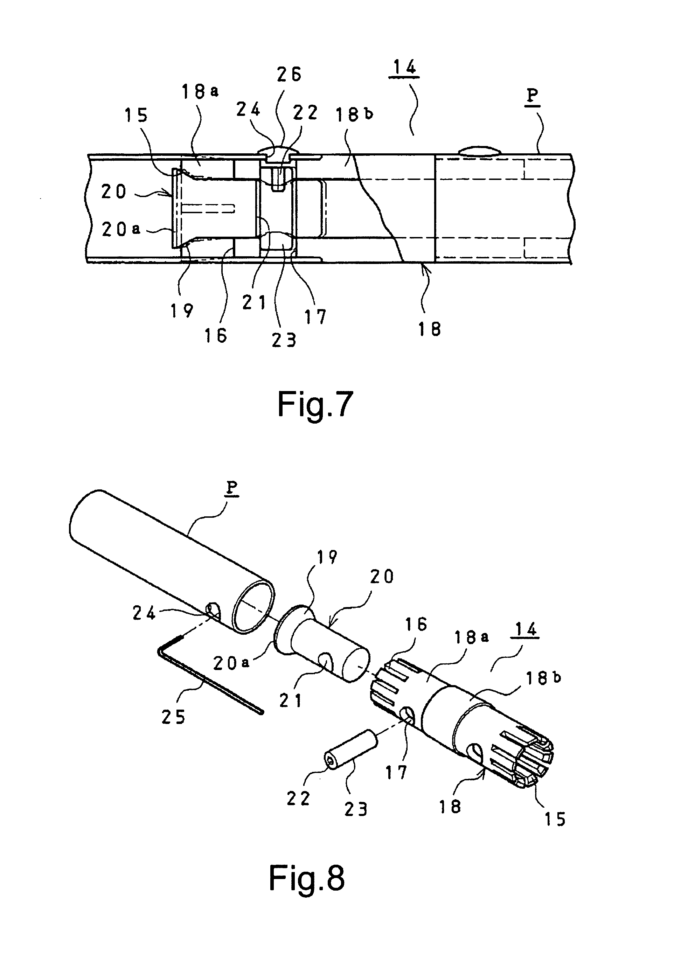

Fig. 6 is a side elevational view with a broken part showing the structure of the pipe connection effected with the pipe joint according to the present invention as stated in Claim 2, Fig. 7 is a view seen in the direction of VII-VII arrows of Fig. 6 and Fig. 8 is a diagonal view of disassembled members of the structure of Fig. 6.

The pipe joint 14 of the present invention as stated in Claim 2 comprises a joint body 18 consisting of insertion parts 18a which, having a cylindrical form to be fitted in the ends of the pipes P, are formed on the inner periphery of one end thereof with a taper 15 that decreases in diameter toward the other end, on the same end are formed with a number of axially extending slits 16, are further provided with a through pin hole 17 perpendicular to the axis thereof, and are connected together in a straight line at the other ends thereof through a connection part 18b consisting of a single cylinder having the same outer diameter as the pipe P. This joint body 18 is made of a synthetic resin material reinforced with glass fiber or a metal material such as aluminum.

In the insertion part 18a is fitted a push pin 20 which, having cylindrical form, is formed at the outer end with a head portion 20a having a taper 19, which engages with the taper 15 of the insertion part 18a and which is provided with a through pin hole 21 corresponding to the pin hole 17 of the insertion part 18a. The pin hole 21 of the push pin 20 is placed at a position slightly shifted toward the head portion 20a from the pin hole of the insertion part 18a at the beginning of engagement between the taper 19 of the push pin 20 and the taper 15 of the insertion part 18a, and in this condition, the both pin holes 17, 21 make an ellipse of which the longer axis is perpendicular to the axes of the push pin 20 and the pin holes 17, 21.

In the pin holes 17, 21 of the insertion part 18a and the push pin 20, which is fitted in the insertion part 18a, is inserted an elliptical pin 23 which, having an elliptic cylindrical form, is provided at the center of one end thereof with a hexagonal recess 22 and is turned to shift the push pin 20 in the axial direction of the insertion part 18a. The elliptical pin 23 has a length slightly smaller than the outer diameter of the insertion part 18a, and through a turn of about 90 degrees, this pin 23 shifts the push pin 20 by about 1mm, which aligns the pin holes 17 and 21 and presses one end of the insertion part 18a against the inner periphery of the pipe P.

To connect pipes using the pipe joint 14 of the present invention as stated in Claim 2, first, as shown in Fig. 6, the insertion part 18a is inserted in the end of the pipe P. Next, via a through hole 24 provided in the end portion of the pipe P corresponding to the pin hole 17, a hexagonal wrench is inserted to engage with the hexagonal recess 22 of the elliptical pin 23, and the elliptical pin 23 is turned about 90 degrees which shifts the push pin outwardly by about 1mm and one end of the insertion part 18a is pressed against the inner periphery of the pipe P.

In Figs. 6 and 7, numeral 26 designates a cap to close the through hole 24 of the pipe P.

Figs. 9 and 10 are a side section view and a partly broken side elevational view, respectively, showing the second and the third embodiments of the structure of the pipe connection effected using the second and the third modifications of the pipe joint of the present invention as stated in Claim 2.

The first modification 14' of the pipe joint 14 of the present invention as stated in Claim 2, whereas the first embodiment has the connection part 18b of the joint body 18 consisting of a single cylinder having the same outer diameter as the pipe P, includes a connection part 18b' of the joint body 18' consisting of also a single cylinder that is bent in an L shape. The second modification 14" includes as a connection part 18b" of the joint 18", a T-shaped structure consisting of three cylinders having the same outer diameter as the pipe P. Since the other structures and actions are similar to those of the pipe joint 14 of the present invention as stated in Claim 2, the same reference symbols are given to the corresponding members and the description of them is omitted.

The connection part 18b, 18b' or 18b" of the joint body 18, 18' or 18" is not limited in construction to a straight type, an L-shape type or a T-shape type; a cross type or a cross type having an additional pipe perpendicular thereto can also be employed.

### EMBODIMENT 3

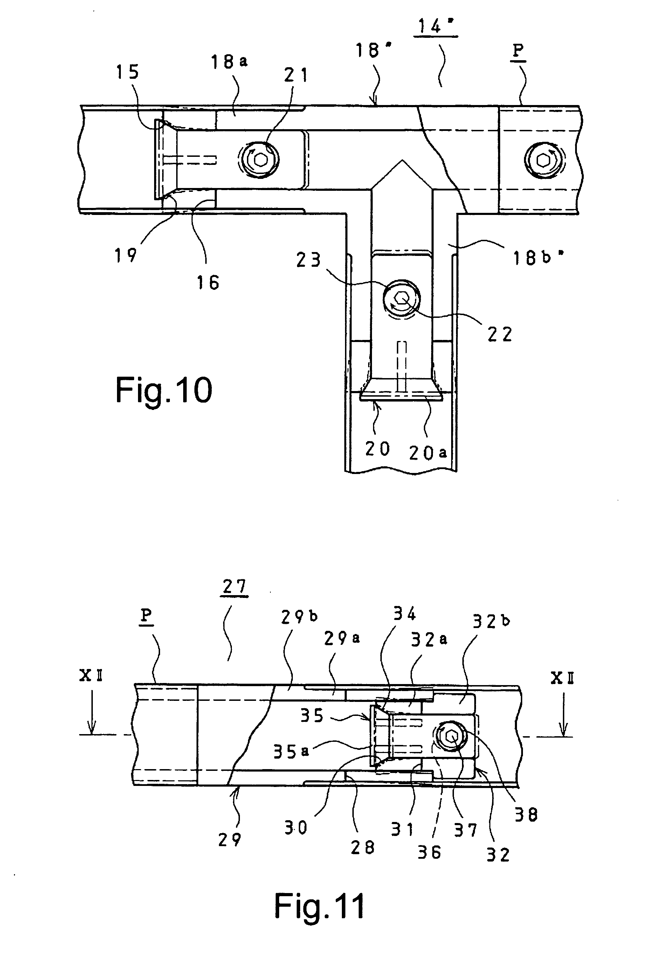

Figs. 11, 12 and 13 are respectively a side elevational view with a broken part to show structure of the pipe connection effected with the pipe joint according to the present invention as stated in Claim 3, a view seen in the direction of XII-XII arrows of Fig. 11 and a diagonal view of the disassembled members of the structure of Fig. 11.

The pipe joint 27 of the present invention as stated in Claim 3 comprises a joint body 29 consisting of insertion parts 29a, which, having a cylindrical form to be fitted in the ends of the pipes P, are formed on one end thereof with a number of axially extending slits 28, and which are connected together in a straight line at the other ends thereof through a connection part 29b consisting of a single cylinder having the same outer diameter as the pipe P. This joint body 29 is made of a synthetic resin material reinforced with glass fiber or a metal material such as aluminum.

In the insertion part 29a of the joint body 29 is fitted an insertion part 32a which is formed on the inner periphery at the inner end thereof with a taper 30 which decreases in diameter toward the outer end, and is formed on the same inner side thereof a number of slits 31, and further at the outer end of the insertion part 32a is provided with a stopper portion 32b having a diameter slightly smaller than the pipe P. On the stopper portion 32b is fitted a sleeve 32 having a through hole 33 perpendicular to the axis thereof. The sleeve 32 is a solid member made of a synthetic resin reinforced with glass fiber.

In the sleeve 32 a push pin 35 is inserted, which, having a cylindrical form, is formed a head portion 35a having at the inner end thereof a taper 34 to engage with the taper 30 of the sleeve 32 and is provided on the outer end side with a through pin hole 36 perpendicular to the axis thereof corresponding to the pin hole 33. The pin hole 36 of the push pin 35 is placed at a position slightly shifted toward the head portion 35a from the pin hole 33 of the sleeve 32 at the beginning of engagement between the taper 34 of the push pin 34 and the taper 30 of the sleeve 32 and in this condition, the both pin holes 36, 33 make an ellipse of which the longer axis is perpendicular to the axes of the push pin 35 and the pin holes 36, 33.

In the pin holes 33 and 36, respectively, of the sleeve 32 fitted in the insertion part 29a of the joint body 29 and of the push pin 35 inserted in the sleeve 32, an elliptical pin 38 is set, which, having the form of an elliptical cylinder, is provided at the center of one end thereof with a hexagonal recess 37 and is turned to shift the push pin in the axial direction of the sleeve. The elliptical pin 38 has a length slightly smaller than the outer diameter of the insertion part 29a. And, through a turn of about 90 degrees, this pin 38 shifts the push pin 35 by about 1mm, which brings the longer axis of the ellipse into alignment with the pin holes 33 and 26 of the sleeve 32 and the push pin 35 and presses one end of the insertion part 29a against the inner periphery of the pipe P.

To connect pipes using the pipe joint 27 of the present invention as stated in Claim 3, first, as shown in Fig. 11, the insertion part 29a is inserted in the end of the pipe P. Next, via a through hole 39 provided in the end portion of the pipe P corresponding to the pin hole 33 of the sleeve 32, a hexagonal wrench is inserted to engage with the hexagonal recess 37 of the elliptical pin 38, and the elliptical pin 38 is turned about 90 degrees which shifts the push pin outwardly by about 1mm and one end of the insertion part 29a is pressed against the inner periphery of the pipe P.

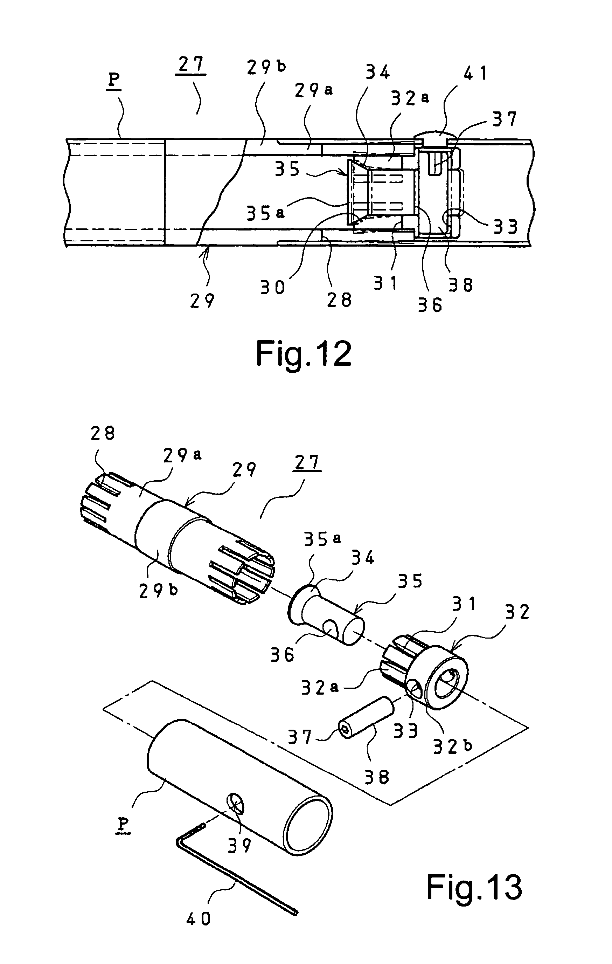

In Fig. 12, numeral 41 designates a cap to close the through hole 39 of the pipe P.

The connection part 29b of the joint body 29 is not limited in construction to a straight type, but can be of an L-shape type, a T-shape type, a cross type or a cross type having an additional pipe perpendicular thereto.

### EMBODIMENT 4

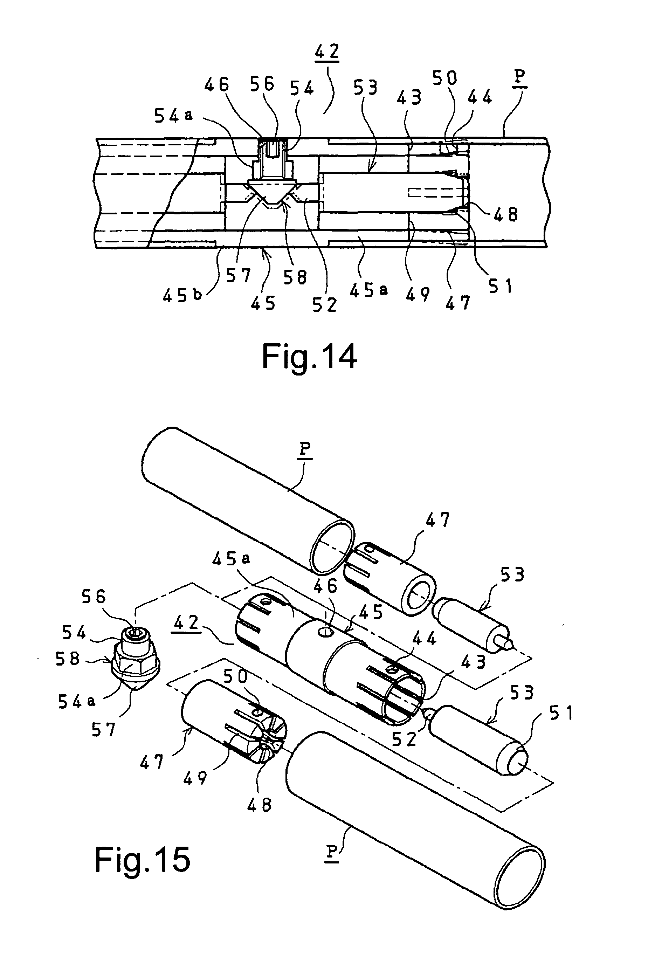

Figs. 14 and 15 are, respectively, a side elevational view with a broken part to show the structure of the pipe connection effected with the pipe joint according to the present invention as stated in Claim 4, and a diagonal view of the disassembled members of the structure of Fig. 14.

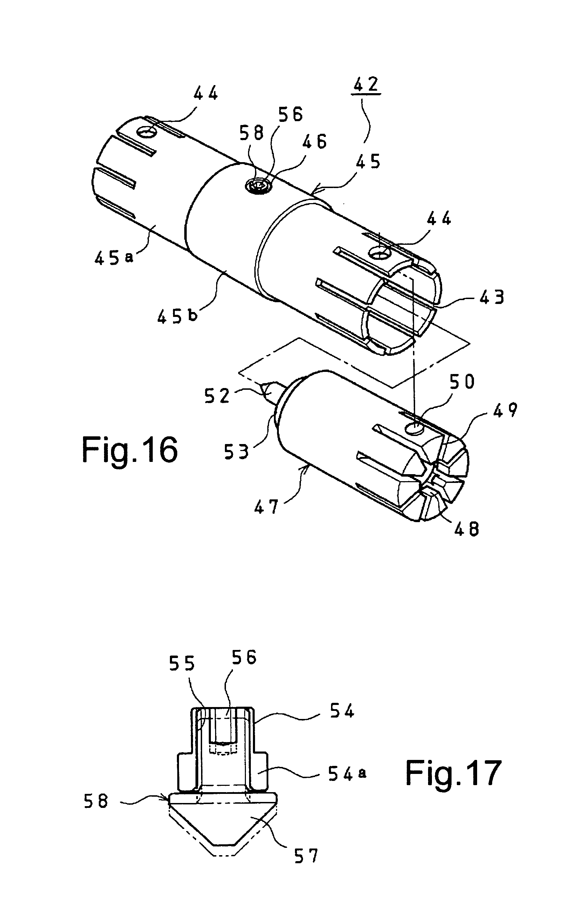

The pipe joint 42 of the present invention as stated in Claim 4, as shown in detail in Fig. 16, comprises a joint body 45 consisting of insertion parts 45a, which, having a cylindrical form to be fitted in the ends of the pipes P, are formed on one end thereof with a number of axially extending slits 43, are further provided on the same end side with a dowel hole 44 and are connected at the other ends in a straight line through a connection part 45b, which, consisting of a single cylinder having the same outer diameter as the pipe P, is provided at the mid point of the axis of the single cylinder a holder hole 46. This joint body 45 is made of a synthetic resin material reinforced with glass fiber or a metal material such as aluminum.

In the insertion part 45a a sleeve 47 is fitted having the form of a cylinder with a bottom, the bottom being the outer end thereof. In the bottom of the sleeve 47 a through hole 48 is provided and on the outer end side a number of axially extending slits 49 are formed, and further on the outer end side periphery thereof a dowel 50 is formed to protrude and engage with the dowel hole 44 of the joint body 45. The dowel 50 of the sleeve 47 serves the purpose of preventing the sleeve 47 from dropping away from the joint body 45 and is slightly inclined inwardly. The sleeve 47 is a solid member made of synthetic resin reinforced with glass fiber.

In the sleeve 47 a push pin 53 is inserted, which, having a cylindrical form, has a taper 51 formed on the periphery of the outer end thereof to engage with the through hole 48 and also has a protrusion 52, with a pointed tip, formed at the center of the inner end thereof. The protrusion 52 of the push pin 53 may have a flat tip of small diameter.

As shown in detail in Fig. 17, in the holder hole 46 is fitted with a push screw holder 54, which, having a cylindrical form, has formed at the inner end thereof a stopper portion 54a having a diameter greater than that of the holder hole 46, and also has formed at the center a threaded hole 55, the stopper portion 54a being chamfered to have a hexagonal peripheral. The shape of the peripheral of the stopper portion 54a of the holder 54 is not limited to a hexagonal shape.

A push screw 58 is screwed in the threaded hole 55 of the push screw holder 54, and the push screw 58 has a hexagonal recess 56 formed at its outer end center, and has a pointed tip 57 at its inner end, which, having a greater diameter, hits against the protrusion of the push pin 53 inserted in the sleeve 47, which in turn is fitted in the insertion part 45a of the joint body 45 to shift the push pin 53 in the direction of the axis of the sleeve 47.

To connect pipes using the pipe joint 42 of the present invention as stated in Claim 4, first, as shown in Fig. 14, the insertion part 45a of the joint body 45 is inserted in the end of the pipe P. Next, by means of a hexagonal wrench, (not shown), which engages with the hexagonal recess 56, the push screw 58 is screwed in. Then, the push pin 53 is shifted outwardly by about 1mm and with the effect of the taper 51 the through hole 48 of the sleeve 47 is spread out thereby pressing simultaneously the far side end portions of the both insertion parts 54a against the inner periphery of the pipes P.

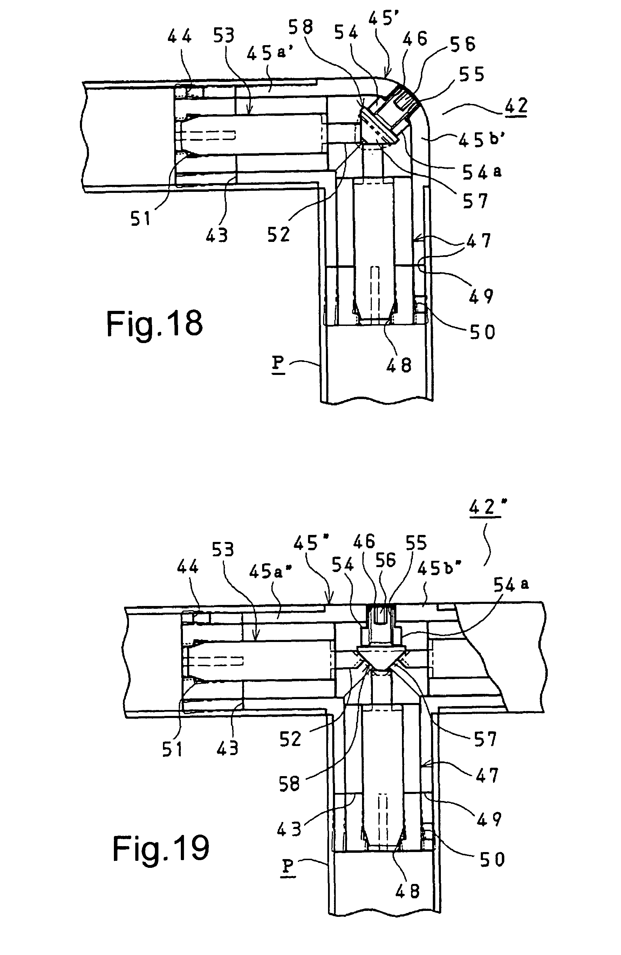

Figs. 18 and 19 are a side section view and a partly broken side elevational view, respectively, showing the second and the third embodiments of the structure of the pipe connection effected using the first and the second modifications of the pipe joint of the present invention as stated in Claim 4.

In the first modification 42' of the pipe joint 42 of the present invention as stated in Claim 4, the first embodiment has the connection part 45b of the joint body 45 consisting of a single cylinder having the same outer diameter as the pipe P, and includes a connection part 45b' of the joint body 45' also consisting of a single cylinder that is bent in L shape. The second modification 42" includes as a connection part 45b" of the joint body 45" a T-shaped structure consisting of three cylinders having the same outer diameter as the pipe P. The holder hole 46 of the joint body 45' or 45" is provided in a direction in which the axis thereof crosses the intersection of the axes of the cylinders. Since the other structures and actions are similar to those of the pipe joint 14 of the present invention as stated in Claim 2, the same reference symbols are given to the corresponding members and the description of them is omitted.

The connection part 45b, 45b' or 45b" of the joint body 45, 45' or 45" is not limited in construction to a straight type, an L-shape type or a T-shape type; a cross type or a cross type having an additional pipe perpendicular thereto can also be employed.

### BIEF DESCRIPTION OF THE DRAWINGS

Fig. 1 is a partly broken side elevational view of the structure of the pipe connection effected with the pipe joint according to the present invention as stated in Claim 1;
Fig. 2 is a diagonal view showing the disassembled members of the fixing device according to the present invention as stated in Claim 1;
Fig. 3 is an illustration of the operation to fit the fixing device of the pipe joint according to the present invention as stated in Claim 1 in the end of a pipe;
Fig. 4 is a side section view of the structure of the pipe connection effected with the first modification of the pipe joint according to the present invention as stated in Claim 1;
Fig. 5 a partly broken side elevational view of the structure of the pipe connection effected with the second modification of the pipe joint according to the present invention as stated in Claim 1;
Fig. 6 is a partly broken side elevational view of the structure of the pipe connection effected with the pipe joint according to the present invention as stated in Claim 2;
Fig. 7 is a sectional view take in the direction of VII-VII arrows of Fig. 6;
Fig. 8 is a diagonal view showing the disassembled members of the connection structure of Fig. 6;

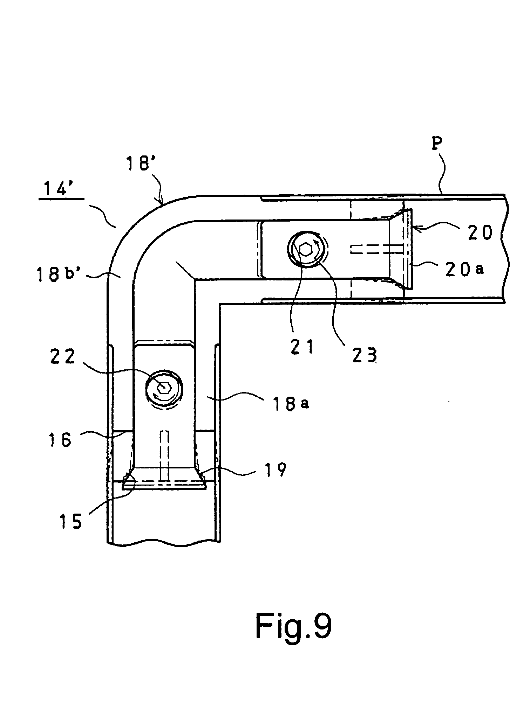

Fig. 9 is a side section view of the structure of the pipe connection effected with the first modification of the pipe joint according to the present invention as stated in Claim 2;
Fig. 10 is a partly broken side elevational view of the structure of the pipe connection effected with the second modification of the pipe joint according to the present invention as stated in Claim 2;
Fig. 11 is a partly broken side elevational view of the structure of the pipe connection effected with the pipe joint according to the present invention as stated in Claim 3;
Fig. 12 is a sectional view take in the direction of XII-XII arrows of Fig. 11;
Fig. 13 is a diagonal view showing the disassembled members of the connection structure of Fig. 11;
Fig. 14 is a partly broken side elevational view of the structure of the pipe connection effected with the pipe joint according to the present invention as stated in Claim 4;
Fig. 15 is a diagonal view showing the disassembled members of the connection structure of Fig. 14;
Fig. 16 a diagonal view showing the disassembled members of the pipe joint of the present invention as stated in Claim 4;
Fig. 17 is a vertical section view showing the push screw holder and the push screw assembled together;
Fig. 18 is a side section view of the structure of the pipe connection effected with the first modification of the pipe joint according to the present invention as stated in Claim 4; and
Fig. 19 is a partly broken side elevational view of the structure of the pipe connection effected with the second modification of the pipe joint according to the present invention as stated in Claim 4.

### LIST OF REFERENCE NUMERALS

- 1, 1', 1":: pipe joint
- 2, 2', 2":: joint body
- 2a:: insertion part
- 2b, 2b', 2b":: connection part
- 3:: fixing device
- 4:: elastic member
- 5:: clamp disc
- 6:: stopper piece
- 6a:: circular plate
- 6b:: leg
- 7:: bolt
- 8:: nut
- 11:: stopper
- 14, 14', 14":: pipe joint
- 15:: taper
- 16:: slit
- 17:: pin hole
- 18, 18', 18":: joint body
- 18a:: insertion part
- 18b, 18b', 18b":: connection part
- 19:: taper
- 20:: push pin
- 20a:: head portion
- 21:: pin hole
- 22:: hexagonal recess
- 23:: elliptical pin
- 27:: pipe joint
- 28:: slit
- 29:: joint body
- 29a:: insertion part
- 29b:: connection part
- 30:: taper
- 31:: slit
- 32:: sleeve
- 32a:: insertion part
- 32b:: stopper portion
- 33:: pin hole
- 34:: taper
- 35:: push pin
- 35a:: head portion
- 36:: pin hole
- 37:: hexagonal recess
- 38:: elliptical pin
- 42, 42', 42":: pipe joint
- 43:: slit
- 44:: dowel hole
- 45, 45', 45":: joint body
- 46:: holder hole
- 47:: sleeve
- 48:: through hole
- 49:: slit
- 50:: dowel
- 51:: taper
- 52:: protrusion
- 53:: push pin
- 54:: push pin holder
- 54a:: stopper portion
- 55:: threaded hole
- 56:: hexagonal recess
- 57:: pointed tip
- 58:: push screw
- P:: pipe

## Claims

1. A pipe joint comprising;
a joint body consisting of a plurality of insertion parts which, having a cylindrical form to be fitted in pipes, are connected together through a connection part consisting of a single cylinder or a plurality of cylinders having the same diameter as the pipes, and
a fixing device which consists of an elastic member of a form of a circular disc having a diameter approximately equal to an inner diameter of said pipes, clamp discs arranged on both sides of said elastic member having approximately a same diameter as said elastic member and a stopper piece, which, being arranged adjacent one of said clamp discs, has a plurality of legs extending axially with increasing diameter from a periphery of a circular plate having a diameter smaller than said inner diameter of said insertion parts and is provided at the ends of the legs bent back claws, which, having a peripheral diameter a little greater than said inner diameter of said insertion parts, is able to bite onto said inner periphery of said insertion parts, and a bolt and a nut which, lead through central holes of said elastic member, clamp discs and stopper piece, fasten them tightly, said fixing device being fitted in the pipe with said stopper piece directed toward an end and placed at a position from said end of said pipe corresponding to a length of said insertion part.

2. A pipe joint comprising;
a joint body consisting of a plurality of insertion parts which, having a cylindrical form to be fitted in pipes, are formed on an inner periphery of one end thereof with a taper that decreases in diameter toward the other end, are formed on a same end a number of axially extending slits, are further provided on said other end a pin hole perpendicular to axis thereof and are connected through a connection part consisting of a single cylinder or a plurality of cylinders having a same diameter as said pipes,
a push pin that, having a cylindrical form to be fitted in said insertion part of said joint body, has formed at the outer end a head portion having a taper to engage with said taper of said insertion part and is provided on an inner end side with a pin hole perpendicular to axis thereof corresponding to said pin hole of said insertion part, and
an elliptical pin which, having a form of an elliptical cylinder, is formed at a center of one end thereof with a hexagonal recess, and is inserted in said pin holes of said insertion part and a push pin fitted therein to be turned to shift said push pin in an axial direction of said insertion part.

3. A pipe joint comprising;
a joint body consisting of a plurality of insertion parts, which, having a cylindrical form to be fitted in pipes, are formed on inner ends thereof with a number of axially extending slits and are connected together at other ends through a connection part consisting of a single cylinder or a plurality of cylinders having a same diameter as said pipes,
a sleeve which includes another insertion part having a cylindrical form to be fitted in said insertion part of said joint body, said inner insertion part being formed on an inner periphery of said inner end thereof with a taper which decreases in diameter toward an other end and on said same inner end a number of axially extending slits, and is provided at the outer end of said inner insertion part with a stopper portion which, having an outer diameter slightly smaller than an inner diameter of said pipe, is provided with a through pin hole perpendicular to an axis thereof,
a push pin which, having a cylindrical form to be inserted in said sleeve, is formed at said inner end thereof with a head portion having a taper to engage with a taper of the sleeve and is provided on an outer end side thereof with a through pin hole perpendicular to an axis thereof approximately corresponding to said pin hole of said sleeve, and
an elliptical pin which, having a form of an elliptical cylinder, is formed at a center of one end thereof a hexagonal recess, and is inserted in said pin holes of said sleeve fitted in said insertion part of said joint body and said push pin to be turned to shift said push pin in an axial direction of the sleeve.

4. A pipe joint comprising;
a joint body consisting of a plurality of insertion parts which, having a cylindrical form to be fitted in pipes, are formed on an inner end thereof with a number of axially extending slits, are provided on said inner end side with a dowel hole and are connected together at other ends thereof through a connection part consisting of a single cylinder or a plurality of cylinders having a same diameter as said pipes, said connection part being provided with a dowel hole at a mid point of said single cylinder, in a case of a single cylinder, or at a position where axes of said cylinders intersect, in a case of a plurality of cylinders,
a sleeve 47 which, having a form of a cylinder with a bottom to be fitted in said insertion part with a bottom thereof on an outer end side, is provided with a through hole in a bottom thereof, is formed on an outer end side thereof with a number of axially extending slits and further is provided on an outer periphery of said outer end side with a dowel which engages with a dowel hole of said pipe joint body,
a push pin which, having a cylindrical form to be inserted in said sleeve; is formed at an outer end thereof a taper to engage with a through hole of the sleeve, and is provided at an inner end thereof with a protrusion having a pointed tip or a flat tip of small diameter,
a push screw holder which, having a cylindrical form to be fitted in a holder of said pipe joint body, is formed at an inner end thereof with a stopper portion having an outer diameter greater than a holder hole, and is formed with a threaded hole at a central axis, and
a push screw which, having a hexagonal recess at an outer end, is screwed in a threaded hole of a push screw holder and is formed at an inner end thereof with a pointed tip having a greater diameter to push therewith against a protrusion of a push pin inserted in a sleeve which is, in turn, fitted in an insertion part of said pipe joint body, thereby to shift said push pin in a direction of an axis of said sleeve.
